# EUROPEAN PATENT APPLICATION

(11) **EP 3 793 179 A1**
(43) Date of publication of application: **17.03.2021**
(21) Application number: 19196574.8
(22) Date of filing: 10.09.2019
(51) Int. Cl.: H04M 9/08

(54) **HANDS-FREE SPEECH COMMUNICATION DEVICE**

(71) Applicant: Peiker Acustic GmbH, 61381 Friedrichsdorf (DE)
(72) Inventor: HELM, Jonas Martin, 94046 Créteil Cedex (FR)
(74) Representative: Pothmann, Karsten

(57) **Abstract**

A hands-free speech communication device comprising, two microphones and a loudspeaker, wherein the communication device comprises a multi-channel signal processing unit, wherein the signal processing unit uses an input signal of the microphones to calibrate the communication device to minimize an echo of a loudspeaker signal, wherein a calibration signal of the loudspeaker to calibrate the communication device is an arbitrary audio signal.

## Description

### FIELD OF THE INVENTION

The present invention relates to a hands-free speech communication device.

### BACKGROUND OF THE INVENTION

A known hands-free telephone setup in vehicles uses a distributed loudspeaker and microphone setup together with single channel voice signal processing. An introduction of a mandatory emergency call requirement and a general request for such systems there has created a need for a good hands-free call performance using closely spaced microphone and loudspeaker, with relatively high acoustic performance measures.

The close proximity of microphone and loudspeaker and the distance to the talker gives rise to extraordinary high echo that is difficult to be suppressed by known conventional echo cancellation algorithms or unidirectional microphones.

### SUMMARY OF THE INVENTION

An object of the invention is to propose an improved hands-free speech communication device, especially an improved hands-free speech communication device for an emergency call system for a vehicle.

According to the invention a hands-free speech communication device comprises, two microphones, a loudspeaker and a multi-channel signal processing unit, wherein the signal processing unit uses an input signal of the microphones to calibrate the communication device to minimize an echo of a loudspeaker signal, wherein a calibration signal of the loudspeaker to calibrate the communication device is an arbitrary audio signal. With this an echo suppression is maximized to guarantee a relatively high and broadband suppression in the direction of the loudspeaker. Through the invention tolerances of the aperture geometry of the hands-free speech communication device and mismatches of the microphones and characteristic changes of the microphones over time are optimized and reduced.

Advantageously the arbitrary audio signal is no special signal, like a beep tone. For example the arbitrary audio signal is a part of a normal audio signal, e.g. part of a song or a speech. Preferably the arbitrary audio signal is any kind of an audio signal.

Also it is of advantage, that the hands-free speech communication device comprises a double-talk detection system to ensure, that the calibration is running only if the loudspeaker is playing exclusively. Favorably the multi-channel signal processing unit comprises an algorithm which has the function of the double-talk detection system, wherein a first possible conventional implementation of the algorithm needs the signal of at least one of the microphones and the far-end signal or downlink signal or wherein another possible implementation would only use the two microphone signals. In either option, wind or temporarily plugged sound inlet holes automatically lead to a stop of the calibration process favorably. For instance, in severe and/or longer lasting cases of wind or plugged sound inlet holes, the double-talk-detection system as it is, can automatically function as a failure detection unit and initiate measures for improving the microphone signal during those cases. Advantageously the automatic calibration is done by using one first microphone as a reference channel and using an adaptive algorithm to determine a time domain FIR filter of arbitrary length employed in a channel of a second microphone to match the response of the reference channel.

The invention provides that the hands-free speech communication device comprises precisely two microphones. The use of precisely two microphones result in a cheaper production of the hands-free speech communication device.

Additionally the invention provides a hands-free speech communication device, which is adapted to perform the calibration during normal use of the hands-free speech communication device. Hereby no special, extra calibration has to be done, especially no factory calibration has to be done.

Also the invention provides, that the loudspeaker is placed so that it has the same distance to both microphones to generate a two channel microphone array. With this a figure of eight sensitivity pattern can be achieved.

Likewise the invention provides that the signal processing unit automatically calibrates the hands-free speech communication device during normal run-time of the hands-free speech communication device. With this no trigger is required to start the calibration. For example the hands-free speech communication is calibrating itself during run-time. This guarantees a comparatively high performance over lifetime of the hands-free speech communication device.

Finally the invention provides that the hands-free speech communication device is designed to be arranged in a vehicle. Preferably the hands-free speech communication device is a vehicle-hands-free speech communication device.

An advantageous embodiment of the invention is a vehicle, in particular a car, with a hands-free speech communication device according to any of the preceding embodiments. For example the hands-free speech communication device is designed to integrate the communication device in an overhead console of the vehicle.

### BRIEF DESCRIPTION OF THE DRAWINGS

The foregoing and other features and advantages of the present invention will become apparent to those skilled in the art to which the present invention relates upon reading the following description with reference to the accompanying drawing, in which:
- Figure 1: shows a perspective view of an embodiment of a handsfree speech communication device,
- Figure 2: shows a top view of figure 1,
- Figure 3: shows a setup of a signal processing unit of the hands-free speech communication device and
- Figure 4: shows in a perspective view a vehicle with an other embodiment of a hands-free speech communication device.

### DETAILED DESCRIPTION OF THE INVENTION

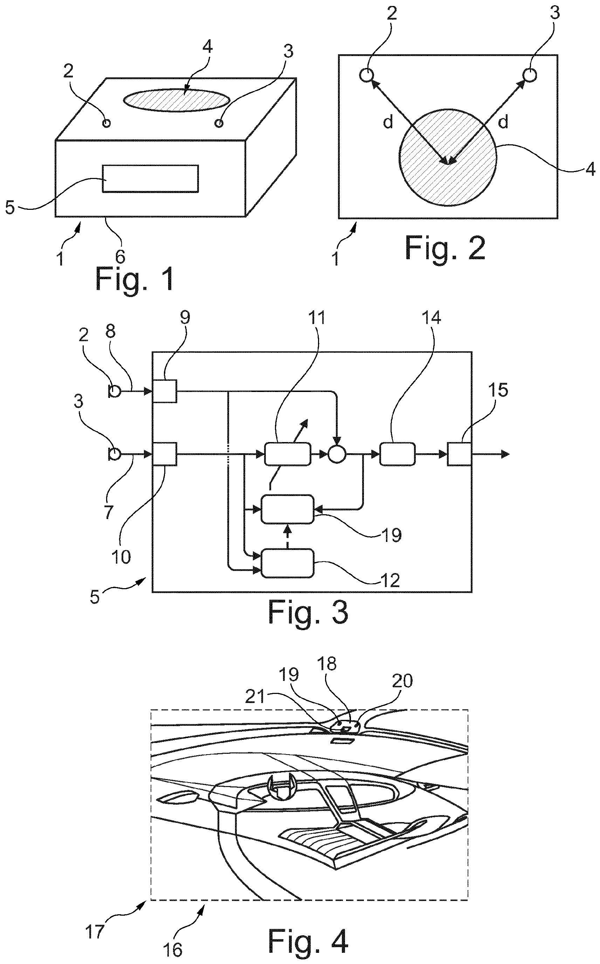

Figure 1 shows in a perspective view a first embodiment of a hands-free speech communication device 1. The communication device 1 comprises a first microphone 2, a second microphone 3, a loudspeaker 4 and a signal processing unit 5. The components of the communication device 1 are arranged in a box 6, for example.

Advantageously the microphones 2, 3 are equidistant arranged from the loudspeaker 4 (Fig. 2). For example the distance d from the first microphone 2 to the loudspeaker 4 is the same as the distance from the second microphone 3 to the loudspeaker 4. In particular the first und second microphone 2, 3 are arranged symmetric.

The signal processing unit 5 is connected to the first and second microphone 2, 3 by means of an electrically conductive connection 7, 8.

The signal processing unit 5 could comprise a first and a second ADC-transformer 9, 10, an adaptive FIR 11, a first processor 12, a second processor 13, a post filter 14 and a DAC-transformer 15. For example, the first processor 12 is designed to compare a first signal from the first microphone 2 with a second signal from the second microphone 3 to detect a double talk. For instance, the first processor 12 is designed to apply a double-talk-detection algorithm to the signals. For instance, the second processor 13 is designed to apply an adaptive algorithm to the signal.

Figure 4 shows in a perspective view an interior 16 of a vehicle 17. In an overhead position a second embodiment of a hands-free speech communication device 18 is installed. Figure 4 shows that the speech communication device 18 comprises two microphones 19, 20 and a loudspeaker 21.

### REFERENCE NUMERALS:

- 1: communication device
- 2: microphone
- 3: microphone
- 4: loudspeaker
- 5: signal processing unit
- 6: box
- 7: connection
- 8: connection
- 9: transformer
- 10: transformer
- 11: adaptive FIR
- 12: processor
- 13: processor
- 14: filter
- 15: transformer
- 16: interior
- 17: vehicle
- 18: communication device
- 19: microphone
- 20: microphone
- 21: loudspeaker

## Claims

1. A hands-free speech communication device (1) comprising,
- two microphones (2, 3),
- a loudspeaker (4),
- wherein the communication device (1) comprises a multi-channel signal processing unit (5),
- wherein the signal processing unit (5) uses an input signal of the microphones (2, 3) to calibrate the communication device (1) to minimize an echo of a loudspeaker signal,
- wherein a calibration signal of the loudspeaker (4) to calibrate the communication device (1) is an arbitrary audio signal.

2. The hands-free speech communication device (1) according to claim 1, **characterized in that** the communication device (1) comprises precisely two microphones (2, 3).

3. The hands-free speech communication device (1) according to any of the preceding claims, **characterized in that** the hands-free speech communication device (1) is adapted to perform the calibration during normal use of the hands-free speech communication device (1).

4. The hands-free speech communication device (1) according to claim 2, **characterized in that** the loudspeaker (4) is placed so that it has the same distance to both microphones (2, 3) to generate a two channel microphone array.

5. The hands-free speech communication device (1) according to any of the preceding claims, **characterized in that** the signal processing unit (5) automatically calibrates the hands-free speech communication device (1) during normal run-time of the hands-free speech communication device (1).

6. The hands-free speech communication device (1) according to any of the preceding claims, **characterized in that** it is designed to be arranged in a vehicle (17).

7. Vehicle (17), in particular car, with a hands-free speech communication device (1) according to any of the preceding claims.
